# FASCICULE DE BREVET EUROPEEN

(11) **EP 3 693 204 B1**
(45) Date de publication et mention de la délivrance du brevet: **02.08.2023**
(21) Numéro de dépôt: 20156201.4
(22) Date de dépôt: 07.02.2020
(51) Int. Cl.: B60L 9/00, H02M 1/12, B60L 3/00, H02M 1/10, B60L 15/00, H02M 7/00, B60L 50/53, H02M 1/14, H02M 7/44, H02J 1/08, H02M 1/00, H02J 3/36

(54) **SYSTÈME D'ALIMENTATION ÉLECTRIQUE POUR VÉHICULE FERROVIAIRE**
STROMVERSORGUNGSSYSTEM FÜR SCHIENENFAHRZEUG
ELECTRICAL POWER SUPPLY SYSTEM FOR A RAILWAY VEHICLE

(30) Priorité: 08.02.2019 FR 1901287
(43) Date de publication de la demande: 12.08.2020
(73) Titulaire: ALSTOM Transport Technologies, 93400 Saint-Ouen-sur Seine (FR); SNCF Voyageurs, 93200 Saint-Denis (FR)
(72) Inventeur: DUMOULIN, Eric, 65290 Juillan (FR); DUTILH, Laure, 65000 Tarbes (FR)
(74) Mandataire: Lavoix

(56) Documents cités:
- DE-A1-102006 043 941
- JP-A- 2018 152 979
- US-A1- 2015 202 978

## Description

La présente invention concerne un système d'alimentation électrique pour véhicule ferroviaire, une chaîne de traction associée et un véhicule ferroviaire associé.

L'invention s'applique dans le domaine du transport ferroviaire, notamment dans le domaine des véhicules ferroviaires à traction électrique, tels que des locomotives ou automotrices.

On connaît dans l'état de la technique des véhicules ferroviaires à chaîne de traction comportant au moins deux moteurs. Chaque moteur comprend un arbre de sortie, chaque arbre de sortie est destiné à entraîner un essieu respectif du véhicule. Le système d'alimentation d'un tel véhicule comprend au moins deux bus de transmission, par exemple d'énergie continue fournie par une source d'énergie, par exemple une caténaire, chaque bus de transmission d'énergie continue acheminant l'énergie vers un onduleur pour réaliser la conversion d'énergie continue en énergie alternative adaptée à alimenter les moteurs.

Cependant, la mise en parallèle de plusieurs bus de transmission d'énergie continue peut entraîner des problèmes de résonance entre ces bus.

Il est nécessaire de limiter la fréquence de résonance d'un tel système d'alimentation.

Une solution connue à ce problème consiste à ajouter un ou plusieurs filtres antirésonance.

Par exemple, dans le cas où le système d'alimentation comporte deux sources d'énergie autonomes, comme par exemple des moteurs diesels connectés chacun à un convertisseur, chaque convertisseur fournissant une énergie continue sur un des bus d'alimentation, il est possible d'ajouter un circuit d'amortissement comportant une inductance d'amortissement, connecté entre les deux bus de transmission d'énergie continue. Un tel circuit a pour objectif de limiter la fréquence de résonance entre les deux bus.

Cependant une telle solution nécessite l'ajout de nouveaux composants destinés à limiter la fréquence de résonance, et s'avère en particulier complexe à mettre en oeuvre dans un système d'alimentation électrique fonctionnant avec plusieurs sources d'alimentation mises en oeuvre alternativement, par exemple une alimentation par caténaire et une alimentation par des sources d'énergie autonomes.

Le document JP 2018 152979A se situe dans le domaine de l'alimentation électrique de véhicules ferroviaires, et s'applique en particulier dans le cas où les véhicules traversent des sections électrifiées et des sections non-électrifiées. Le système d'alimentation électrique décrit dans JP 2018 152979A est adapté à être connecté à deux sources d'énergie.

Le document US 2015/202978 A1 décrit un système d'alimentation comportant une première source d'énergie et des dispositifs de stockage d'énergie constituant une deuxième source d'énergie.

Le document DE 10 2006 043941 A décrit un système d'alimentation de chaîne de traction d'un véhicule ferroviaire.

L'invention a pour but de proposer une solution moins coûteuse permettant de limiter les résonances entre bus de transmission d'énergie continue branchés en parallèle, notamment dans le cas de figure d'un système d'alimentation permettant l'alimentation par plusieurs sources d'énergie.

A cet effet, l'invention a pour objet un système d'alimentation électrique pour véhicule ferroviaire selon la revendication 1.

Avantageusement, le système d'alimentation proposé permet d'éviter les résonances entre bus de transmission d'énergie continue branchés en parallèle sans ajout de composant supplémentaire, les inductances déjà présentes étant ré-utilisées à cet effet.

Le système d'alimentation selon l'invention peut présenter une ou plusieurs des caractéristiques récitées dans les revendications dépendantes 2 à 5, prises indépendamment ou dans toutes leurs combinaisons techniquement acceptables.

L'invention a également pour objet une chaîne de traction pour un véhicule ferroviaire, la chaîne de traction comportant au moins deux moteurs branchés à un système d'alimentation tel que défini ci-dessus.

L'invention a également pour objet un véhicule électrique ferroviaire, comprenant une chaîne de traction configurée pour provoquer un déplacement du véhicule, la chaîne de traction étant telle que définie ci-dessus.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 illustre schématiquement une partie de véhicule ferroviaire, comprenant une chaîne de traction et un système d'alimentation électrique selon un mode de réalisation, dans un premier mode de fonctionnement ;
- [Fig 2] la figure 2 illustre schématiquement une partie de véhicule ferroviaire, comprenant une chaîne de traction et un système d'alimentation électrique selon un mode de réalisation, dans un deuxième mode de fonctionnement.

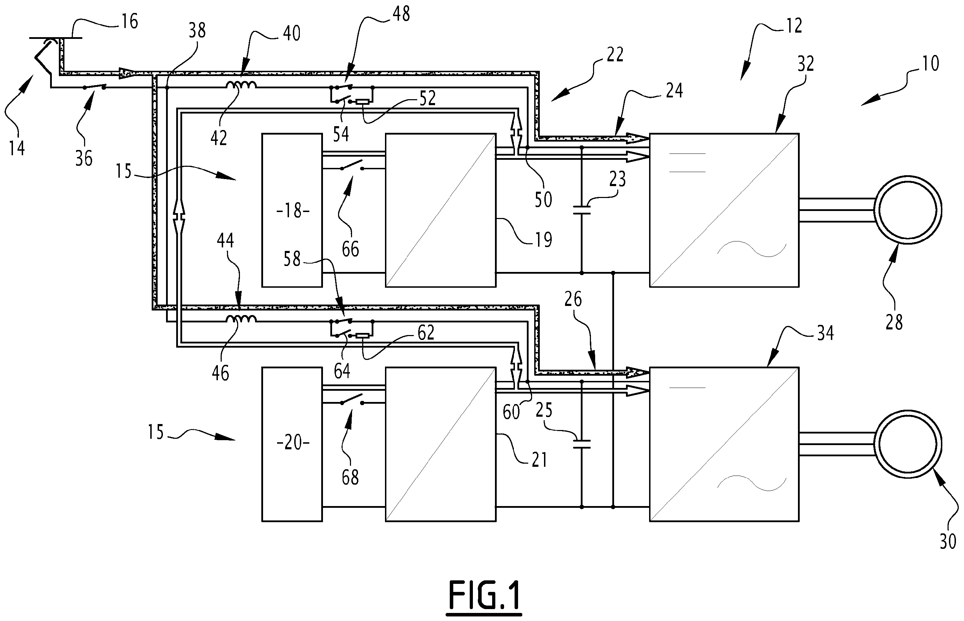

Sur la figure 1, un véhicule ferroviaire 10, comprend une chaîne de traction 12, la chaîne de traction comportant un pantographe 14, connecté à une caténaire 16.

La caténaire est une première source d'énergie électrique pour le véhicule ferroviaire 10, et fournit dans le cas représenté une énergie continue.

La chaîne de traction 12 comporte, dans l'exemple de la figure 1, deux sources d'énergie autonomes 18, 20, formant une deuxième source d'énergie 15 pour le véhicule ferroviaire 10.

Les sources d'énergie autonomes sont par exemple des batteries d'accumulateurs embarqués sur le véhicule ferroviaire 10.

En variante, les sources d'énergie autonomes sont des moteurs diesel.

Chacune des sources d'énergie autonome 18, 20 est branchée en entrée d'un convertisseur respectif 19, 21 adapté à convertir la première énergie électrique continue moyenne tension en deuxième énergie électrique continue de tension plus élevée nécessaire pour l'utilisation des moteurs électriques.

Dans le cas de la variante avec moteurs diesel, les convertisseurs 19, 21 convertissent l'énergie électrique alternative triphasée en énergie électrique continue.

La chaîne de traction 12 comporte également un système d'alimentation 22.

Le système d'alimentation 22 comprend dans l'exemple de réalisation deux bus de transmission d'énergie continue 24, 26 pour acheminer l'énergie électrique d'alimentation du moteur électrique alternatif triphasé correspondant 28, 30. Chaque bus est constitué d'une capacité 23, 25.

Les convertisseurs 19, 21 sont connectés au système d'alimentation 22.

La sortie du convertisseur 19 est aussi connectée à la sortie du convertisseur 21.

Les moteurs électriques alternatif triphasés 28, 30 font partie de la chaîne de traction 12 du véhicule ferroviaire 10.

Chacun des moteurs 28, 30 est branché à la sortie d'un onduleur correspondant 32, 34, adapté à convertir l'énergie continue fournie par le bus de transmission d'énergie continue 24, 26 en énergie alternative triphasée.

Le système d'alimentation 22 est adapté à fonctionner selon deux modes de fonctionnement, un premier mode dans lequel l'énergie fournie aux moteurs 28, 30 provient de la première source d'énergie 16, et un deuxième mode de fonctionnement dans lequel l'énergie fournie aux moteurs 28, 30 provient de la deuxième source d'énergie 15.

Afin de sélectionner un des deux modes de fonctionnement, plusieurs contacteurs sont utilisés.

La configuration de branchement pour le premier mode de fonctionnement est illustrée à la figure 1.

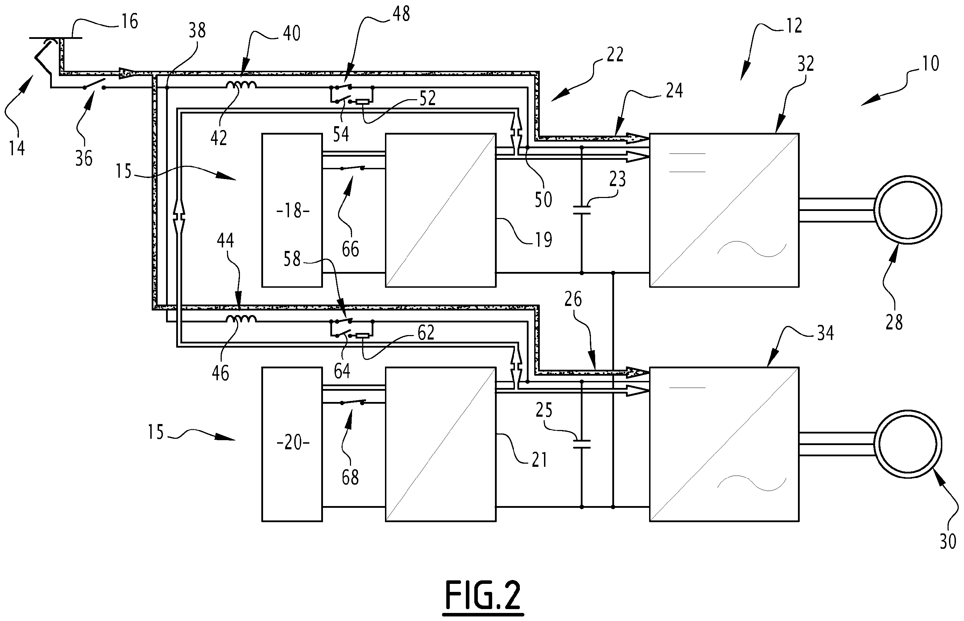

La configuration de branchement pour le deuxième mode de fonctionnement est illustrée à la figure 2.

Le système d'alimentation 22 comprend un disjoncteur d'alimentation (en anglais « Main Circuit Breaker ») par la première source 36, branché entre le pantographe 14 et un point 38 de branchement en parallèle des bus continus 24, 26.

L'alimentation du bus de transmission d'énergie 24 par la caténaire 16 est effectuée à travers l'inductance de filtre d'impédance d'entrée 42 destinée à assurer une impédance d'entrée correcte pour la chaîne de traction 12. L'inductance 42 est branchée entre le point 38 et une entrée de l'onduleur 32.

L'alimentation du deuxième bus de transmission d'énergie 26 est effectuée à travers l'inductance de filtre d'impédance d'entrée 46. L'inductance 46 est branchée entre le point 38 et une entrée de l'onduleur 34.

Dans le mode de réalisation illustré sur les figures 1 et 2, la sortie de l'inductance 42 est branchée en entrée d'un premier contacteur de branche 48, dont la sortie est branchée à un point 50 faisant partie du premier bus de transmission d'énergie continue 24. Une des sorties du convertisseur 19 est également branchée au point 50.

Dans ce mode de réalisation, une résistance 52 est branchée en parallèle du premier contacteur de branche 48, la résistance 52 étant branchée en série à un contacteur auxiliaire 54.

Ce dispositif technique permet de gérer la phase de mise sous tension de la chaîne de traction 12. Hors tension, les contacteurs sont ouverts, à la mise sous tension de la chaîne de traction, le contacteur auxiliaire 54 est fermé et permet de charger la capacité 23 à travers la résistance 52 ce qui permet de limiter le courant. Lorsque la capacité 23 est suffisamment chargée, le contacteur 48 est fermé et le contacteur auxiliaire 54 ouvert. La chaîne de traction 12 est alors prête à fonctionner.

De manière analogue, la sortie de l'inductance 46 est branchée en entrée d'un deuxième contacteur de branche 58, dont la sortie est branchée à un point 60 faisant partie du deuxième bus de transmission d'énergie continue 26. Une des sorties du convertisseur 21 est également branchée au point 60.

Dans ce mode de réalisation, une résistance 62 est branchée en parallèle du deuxième contacteur de branche 58, la résistance 62 étant branchée en série à un contacteur auxiliaire 64, pour une gestion de la phase de mise sous tension comme expliqué ci-dessus.

De plus, le système d'alimentation 22 comporte un premier contacteur de deuxième source 66, branché entre une première sortie de la source d'énergie 18 et une première entrée du convertisseur 19, et un deuxième contacteur de deuxième source 68, branché entre une première sortie de la source d'énergie 20 et une première entrée du convertisseur 21.

Les divers contacteurs sont réalisés de manière classique.

Dans le premier mode de fonctionnement, le disjoncteur de première source 36 est fermé de manière à laisser passer le courant électrique, ainsi que les contacteurs de première et deuxième branche 48 et 58. Les premier et deuxième contacteurs de deuxième source, 66 et 68 sont ouverts.

La configuration de connexion est illustrée à la figure 1.

Dans le deuxième mode de fonctionnement, le disjoncteur de première source 36 est ouvert, le système d'alimentation étant alors coupé de la première source, qui est la caténaire.

Les contacteurs de première et deuxième branche 48 et 58 sont fermés, de même que les premier et deuxième contacteurs de deuxième source, 66 et 68. La configuration de connexion est illustrée à la figure 2.

Avantageusement, les inductances 42 et 46 sont dimensionnées pour à la fois la réalisation d'une impédance correcte pour la chaîne de traction et pour réaliser une connexion entre les bus de transmission d'énergie continue 24, 26 sans résonance dans chaque mode de fonctionnement.

On entend ici par sans résonance une connexion dans laquelle la fréquence de résonance entre le premier et le deuxième bus de transmission d'énergie continue est inférieur aux fréquences d'excitation par les convertisseurs connectés sur ces bus.

Comme montré clairement dans les figures 1 et 2, les configurations pour chaque mode de fonctionnement font intervenir les inductances 42, 46, ces inductances faisant partie de la fonction de réalisation de la valeur d'impédance correcte pour l'énergie continue issue de la première source, donc de la caténaire.

Ces inductances 42, 46 sont également utilisées dans le deuxième mode de fonctionnement dans lequel l'énergie est fournie par une deuxième source d'énergie, indépendante de la caténaire. Dans le mode de réalisation décrit, il s'agit de plusieurs sources d'énergie autonomes.

Pour ces deux modes de fonctionnement distincts, les niveaux de courant maximum circulant dans le système d'alimentation sont différents. Les caractéristiques des inductances 42, 46 sont choisies pour assurer un fonctionnement dans chacun des modes.

L'invention a été décrite ci-dessus dans un mode de réalisation dans lequel deux bus de transmission d'énergie continue sont branchés en parallèle.

Il est clair que l'invention s'applique avec un nombre supérieur de bus branchés en parallèle.

## Revendications

1. Système d'alimentation électrique pour véhicule ferroviaire adapté à alimenter au moins deux moteurs (28, 30) via leurs onduleurs respectifs (32, 34) dans une chaîne de traction (12), le système d'alimentation comprenant au moins deux bus de transmission (24, 26) d'énergie continue branchés en parallèle, chacun desdits bus de transmission (24, 26) étant apte à fournir de l'énergie à un desdits moteurs (28, 30) via son onduleur respectif (32, 34), le système étant adapté à être connecté à une première source d'énergie (16) et à une deuxième source d'énergie (15), chaque bus de transmission (24, 26) comprenant une inductance (42, 46) de filtre d'impédance d'entrée permettant de réaliser une impédance d'entrée donnée pour la chaîne de traction,
comprenant une pluralité de contacteurs (48, 58, 66, 68) et un disjoncteur (36) de première source permettant de configurer un premier mode de fonctionnement utilisant la première source d'énergie (16) ou un deuxième mode de fonctionnement utilisant la deuxième source d'énergie (15),
ladite première source d'énergie (16) étant une caténaire et ladite deuxième source d'énergie (15) comportant plusieurs sources d'énergie (18, 20) autonomes embarquées dans ledit véhicule ferroviaire,
chaque source d'énergie autonome (18, 20) étant branchée, dans le deuxième mode de fonctionnement, via un contacteur respectif (66, 68) de la pluralité de contacteurs, ce contacteur étant appelé contacteur de deuxième source, à un des bus de transmission d'énergie continue (24, 26), via un point (50, 60) faisant partie de ce bus de transmission (24, 26) d'énergie continue, situé à l'entrée de l'onduleur (32, 34) respectif, pour fournir une énergie continue à chaque bus de transmission (24, 26) d'énergie continue,
ledit disjoncteur (36) de première source étant branché entre la première source d'énergie (16) et lesdits bus de transmission (24, 26) d'énergie continue, et adapté à connecter et à déconnecter le système d'alimentation à la première source d'énergie,
**caractérisé en ce que** :
en sortie du disjoncteur (36) de première source sont branchées plusieurs branches, chaque branche comportant au moins une desdites inductances (42, 46) de filtre d'impédance d'entrée, en sortie duquel est branché un contacteur (48, 58) respectif de la pluralité de contacteurs, appelé contacteur de branche, par branche, dont la sortie est branchée à un desdits points (50, 60) respectif faisant partie d'un desdits bus de transmission d'énergie continue, à l'entrée de l'onduleur (32, 34) respectif, chacune des inductances (42, 46) de filtre d'impédance d'entrée de bus de transmission d'énergie continue étant dimensionnée pour réaliser une connexion des bus de transmission (24, 26) d'énergie continue sans résonance dans chacun des premier et deuxième modes de fonctionnement.

2. Système d'alimentation électrique selon la revendication 1 dans lequel chaque source d'énergie autonome (18, 20) fournit une première énergie électrique continue, comprenant, pour chaque source d'énergie autonome, un convertisseur d'énergie (19, 21) branché en sortie de ladite source d'énergie autonome (18, 20) et adapté à convertir la première énergie électrique continue en deuxième énergie électrique continue.

3. Système d'alimentation électrique selon la revendication 1 ou 2, dans lequel en sortie de chaque source d'énergie autonome (18, 20) est branché le contacteur (66, 68) de deuxième source, adapté à connecter et à déconnecter le système d'alimentation à ladite source d'énergie autonome (18, 20).

4. Système d'alimentation électrique selon la revendication 3, dans lequel, dans le premier mode de fonctionnement, le disjoncteur (36) de première source (16) et les contacteurs (48, 58) de branche sont en position de connexion, et les contacteurs (66, 68) de deuxième source sont ouverts.

5. Système d'alimentation électrique selon l'une des revendications 3 ou 4, dans lequel, dans le deuxième mode de fonctionnement, le disjoncteur (36) de première source est en position de déconnexion, et lesdits contacteurs (48, 58) de branche et les contacteurs (66, 68) de deuxième source sont tous en position de connexion.

6. Chaîne de traction pour véhicule ferroviaire **caractérisée en ce qu'**elle comporte au moins deux moteurs (28, 30) branchés à un système d'alimentation selon l'une quelconque des revendications précédentes.

7. Véhicule ferroviaire comportant une chaîne de traction configurée pour provoquer un déplacement du véhicule, **caractérisé en ce que** la chaîne de traction est conforme à la revendication 6.

## Patentansprüche

1. Stromversorgungssystem für Schienenfahrzeug, das angepasst ist, um mindestens zwei Motoren (28, 30) über ihre jeweiligen Wechselrichter (32, 34) in einem Antriebsstrang (12) mit Strom zu versorgen, das Systemstromversorgungssystem umfassend mindestens zwei parallel geschaltete Gleichstrom-Übertragungsbusse (24, 26), wobei jeder der Übertragungsbusse (24, 26) geeignet ist, um einem der Motoren (28, 30) über seinen jeweiligen Wechselrichter (32, 34) Strom bereitzustellen, wobei das System angepasst ist, um mit einer ersten Stromquelle (16) und einer zweiten Stromquelle (15) verbunden zu sein, jeder Übertragungsbus (24, 26) umfassend eine Eingangsimpedanz-Filterinduktivität (42, 46), die es ermöglicht, eine gegebene Eingangsimpedanz für den Antriebsstrang zu realisieren,
umfassend eine Vielzahl von Schaltschützen (48, 58, 66, 68) und einen ersten Leistungsschalter (36) für die erste Quelle, der es ermöglicht, einen ersten Betriebsmodus unter Verwendung der ersten Stromquelle (16) oder einen zweiten Betriebsmodus unter Verwendung der zweiten Stromquelle (15) zu konfigurieren,
wobei die erste Stromquelle (16) eine Oberleitung ist und die zweite Stromquelle (15) mehrere autonome Stromquellen (18, 20) umfasst, die an Bord des Schienenfahrzeugs sind,
wobei jede unabhängige Stromquelle (18, 20) in der zweiten Betriebsart über ein entsprechendes Schaltschütz (66, 68) der Vielzahl von Schaltschützen, wobei dieses Schaltschütz als Schaltschütz der zweiten Quelle bezeichnet wird, über einen Punkt (50, 60), der Teil dieses Gleichstrom-Übertragungsbusses (24, 26) ist, der sich an dem Eingang des jeweiligen Wechselrichters (32, 34) befindet, mit einem der Gleichstrom-Übertragungsbusse (24, 26) verbunden ist, um jedem Gleichstrom-Übertragungsbus (24, 26) Gleichstrom zuzuführen,
wobei der Leistungsschalter (36) der ersten Quelle zwischen die erste Stromquelle (16) und die Gleichstrom-Übertragungsbusse (24, 26) geschaltet ist, und angepasst ist, um das Stromversorgungssystem mit der ersten Stromquelle zu verbinden und davon zu trennen, **dadurch gekennzeichnet, dass**:
an dem Ausgang des Leistungsschalters (36) der ersten Quelle mehrere Zweige angeschlossen sind, wobei jeder Zweig mindestens eine der Induktivitäten (42, 46) für Eingangsimpedanzfilter umfasst, an deren Ausgang ein jeweiliges Schaltschütz (48, 58) der Vielzahl von Schaltschützen angeschlossen ist, der als Zweigschaltschütz bezeichnet wird, dessen Ausgang an einen jeweiligen der Punkte (50, 60), die Teil eines der Gleichstrom-Übertragungsbusse sind, an den Eingang des jeweiligen Wechselrichters (32, 34) angeschlossen ist,
jede der Induktivitäten (42, 46) für Gleichstrom-Übertragungsbus-Eingangsimpedanzfilter bemessen ist, um eine resonanzfreie Verbindung der Gleichstrom-Übertragungsbusse (24, 26) in jeder von der ersten und der zweiten Betriebsmodi zu realisieren.

2. Stromversorgungssystem nach Anspruch 1, wobei jede autonome Stromquelle (18, 20) einen ersten elektrische Gleichstrom bereitstellt, umfassend, für jede autonome Stromquelle, einen Stromwandler (19, 21), der an dem Ausgang der autonomen Stromquelle (18, 20) angeschlossen und angepasst ist, um den ersten elektrischen Gleichstrom in einen zweiten elektrischen Gleichstrom umzuwandeln.

3. Stromversorgungssystem nach Anspruch 1 oder 2, wobei an dem Ausgang von jeder autonomen Stromquelle (18, 20) das Schaltschütz (66, 68) der zweiten Quelle angeschlossen ist, das angepasst ist, um das Stromversorgungssystem mit der autonomen Stromquelle (18, 20) zu verbinden und davon zu trennen.

4. Stromversorgungssystem nach Anspruch 3, wobei, in der ersten Betriebsart, der Leistungsschalter (36) der ersten Quelle (16) und die Zweigschaltschütze (48, 58) in Verbindungsposition sind und die Schaltschütze (66, 68) der zweiten Quelle geöffnet sind.

5. Stromversorgungssystem nach einem der Ansprüche 3 oder 4, wobei, in der zweiten Betriebsart, der Leistungsschalter (36) der ersten Quelle in Trennposition ist und die Zweigschaltschütze (48, 58) und die Schaltschütze (66, 68) der zweiten Quelle alle in Verbindungsposition sind.

6. Antriebsstrang für ein Schienenfahrzeug, **dadurch gekennzeichnet, dass** er mindestens zwei Motoren (28, 30) umfasst, die an ein Versorgungssystem nach einem der vorherigen Ansprüche angeschlossen sind.

7. Schienenfahrzeug, umfassend eine Antriebskette, die konfiguriert ist, um eine Bewegung des Fahrzeugs zu bewirken, **dadurch gekennzeichnet, dass** die Antriebskette gemäß Anspruch 6 ist.

## Claims

1. A rail vehicle power supply system adapted to supply power to at least two motors (28, 30) via their respective inverters (32, 34) in a power train (12), the power supply system comprising at least two DC power transmission buses (24, 26) connected in parallel, each of said transmission buses (24, 26) being adapted to supply power to one of said motors (28, 30) via its respective inverter (32, 34), the system being adapted to be connected to a first power source (16) and a second power source (15), each transmission bus (24, 26) comprising an input impedance filter inductance (42, 46) for achieving a given input impedance for the drive train,
comprising a plurality of switches (48, 58, 66, 68) and a first source circuit breaker (36) for configuring a first mode of operation using the first power source (16) or a second mode of operation using the second power source (15),
said first power source (16) being a catenary and said second power source (15) comprising a plurality of autonomous power sources (18, 20) on board said railway vehicle,
each autonomous power source (18, 20) being connected, in the second mode of operation, via a respective switch (66, 68) of the plurality of switches, which switch is referred to as a second source switch, to one of the DC power buses (24, 26), via a point (50, 60) forming part of that DC power bus (24, 26), located at the input of the respective inverter (32, 34), to supply DC power to each DC power bus (24, 26),
said first source circuit breaker (36) being connected between the first power source (16) and said DC power transmission buses (24, 26), and adapted to connect and disconnect the power system to the first power source, **characterised in that**:
the output of the first source circuit breaker (36) is connected to a plurality of branches, each branch comprising at least one of said input impedance filter inductors (42, 46), at the output of which is connected a respective switch (48, 58) of the plurality of switches, referred to as a branch switch per branch, the output of which is connected to a respective one of said points (50, 60) forming part of one of said DC power transmission buses at the input of the respective inverter (32, 34),
each of the DC power bus input impedance filter inductors (42, 46) being sized to provide a connection of the DC power buses (24, 26) without resonance in each of the first and second modes of operation.

2. The power supply system of claim 1 wherein each self-contained power source (18, 20) provides a first DC electrical power, comprising, for each self-contained power source, a power converter (19, 21) connected to the output of said self-contained power source (18, 20) and adapted to convert the first DC electrical power into a second DC electrical power.

3. A power supply system according to claim 1 or 2, wherein at the output of each self-contained power source (18, 20) is connected the second source switch (66, 68), adapted to connect and disconnect the power supply system to said self-contained power source (18, 20).

4. The power supply system of claim 3, wherein in the first mode of operation the first source (16) circuit breaker (36) and the branch switches (48, 58) are in the connected position, and the second source switches (66, 68) are open.

5. The power supply system of any of claims 3 or 4, wherein in the second mode of operation the first source circuit breaker (36) is in the disconnect position, and said branch switches (48, 58) and second source switches (66, 68) are all in the connection position.

6. Traction chain for a rail vehicle, **characterised in that** it comprises at least two motors (28, 30) connected to a power supply system according to any of the preceding claims.

7. A railway vehicle comprising a drive train configured to cause the vehicle to move, **characterised in that** the drive train is in accordance with claim 6.
